# EUROPEAN PATENT APPLICATION

(11) **EP 4 552 992 A1**
(43) Date of publication of application: **14.05.2025**
(21) Application number: 23850171.2
(22) Date of filing: 04.08.2023
(51) Int. Cl.: B65D 30/02, B32B 7/022, B65D 65/40

(54) **POUCH**

(30) Priority: 04.08.2022 JP 2022124901
(71) Applicant: Fuji Seal International, Inc., Osaka-shi, Osaka 532-0003 (JP)
(72) Inventor: SUGIUCHI, Risa, Osaka-shi, Osaka 532-0003 (JP); YAMAMOTO, Atsushi, Osaka-shi, Osaka 532-0003 (JP); MATSUMOTO, Mitsuaki, Osaka-shi, Osaka 532-0003 (JP)
(74) Representative: Prüfer & Partner mbB Patentanwälte · Rechtsanwälte
(86) International application number: PCT/JP2023/028562
(87) International publication number: WO 2024/029618

(57) **Abstract**

A pouch includes a packaging material. The packaging material includes a first film (51) composed of machine direction oriented polyethylene oriented in a machine direction corresponding to a direction orthogonal to an up-down direction of a pouch and a second film (52) laminated on the first film (51). The second film (52) has tensile breaking stress in a transverse direction corresponding to the up-down direction of the pouch of 50 MPa or more.

## Description

### Technical Field

This invention relates to a pouch.

### Background Art

For example, JP 2020-203971 A (Patent Document 1) discloses a laminate composed of a film and a sealant layer. The film is made of orientation-treated polyethylene or polypropylene. The sealant layer is made of linear low density polyethylene.

### Citation List

### Patent Literature

Patent Document 1: JP 2020-203971 A

### Summary of Invention

### Technical Problem

As disclosed in Patent Document 1 described above, it is known to use orientation-treated polyethylene as a packaging material used for manufacturing pouches. In particular, machine direction oriented polyethylene oriented in a machine direction (MD) parallel to a flow direction during resin molding of the packaging material has a characteristic of high strength in the machine direction. Since the machine direction oriented polyethylene has a large elastic modulus and is difficult to be oriented, it has machine suitability in which pitch deviation and the like caused by orientation during manufacturing of the pouch are suppressed.

However, the machine direction oriented polyethylene has an excellent machine suitability but has low strength in a transverse direction (TD) orthogonal to the machine direction compared with the strength in the machine direction. For this reason, the pouch using such machine direction oriented polyethylene is easily torn in the machine direction upon receiving an external force in the transverse direction and has insufficient drop resistance of the pouch. Such a problem is particularly remarkable in a large-capacity pouch in which the impact at the time of dropping is excessive.

An object of this invention is to solve the above problems and is to provide a pouch having an excellent machine suitability and an excellent drop resistance.

### Solution to Problem

[1] A pouch includes a packaging material. The packaging material includes a first film composed of machine direction oriented polyethylene oriented in a machine direction corresponding to a direction orthogonal to an up-down direction of the pouch and a second film laminated on the first film. The second film has tensile breaking stress in a transverse direction corresponding to the up-down direction of the pouch of 50 MPa or more.
   The pouch configured in this manner allows good machine suitability at the time of manufacturing the pouch to be obtained by the first film composed of machine direction oriented polyethylene. Laminating the second film having tensile breaking stress of 50 MPa or more in the transverse direction on the first film composed of machine direction oriented polyethylene having excellent strength in the machine direction can obtain a packaging material having high strength in the machine direction and in the transverse direction. This can achieve a pouch having an excellent drop resistance.
[2] The pouch according to [1], wherein the second film is composed of transverse direction oriented polyethylene oriented in the transverse direction corresponding to the up-down direction of the pouch, or biaxial direction oriented polyethylene oriented in the machine direction and in the transverse direction.
   In the pouch configured in this manner, the transverse direction oriented polyethylene and the biaxial direction oriented polyethylene are oriented at least in the transverse direction and thus have excellent strength in the transverse direction. Therefore, the second film meeting a requirement of tensile breaking stress in the transverse direction can be easily obtained.
[3] The pouch according to [1] or [2], wherein the second film has tensile breaking stress in the machine direction of 100 MPa or less.
   The pouch configured in this manner can prevent a linear trace (hair) from occurring on a cut surface of the second film at the time of manufacturing the pouch due to the second film being excessive in strength in the machine direction and the second film being too hard.
[4] The pouch according to any of [1] to [3], wherein the second film has an elastic modulus in each of the transverse direction and the machine direction of 1000 MPa or less.

The pouch configured in this manner can prevent a linear trace (hair) from occurring on a cut surface of the second film at the time of manufacturing the pouch due to the second film being difficult to be oriented and being too hard.

### Advantageous Effects of Invention

As described above, this invention can provide a pouch having an excellent machine suitability and an excellent drop resistance.

### Brief Description of Drawings

FIG. 1 is a front view illustrating a pouch in an embodiment of this invention.
FIG. 2 is a cross-sectional view illustrating the pouch as viewed in a direction of arrows along line II-II in FIG. 1.
FIG. 3 is a cross-sectional view illustrating a bag body (packaging material) in a range surrounded by a two-dot chain line III in FIG. 2.
FIG. 4 is a view schematically illustrating a first step of a method of manufacturing the pouch.
FIG. 5 is a view schematically illustrating a second step of the method of manufacturing the pouch.
FIG. 6 is a view schematically illustrating a third step of the method of manufacturing the pouch.
FIG. 7 is a view schematically illustrating a modification of the third step of the method of manufacturing a pouch.
FIG. 8 is a view schematically illustrating a fourth step of the method of manufacturing the pouch.
FIG. 9 is a view schematically illustrating a fifth step of the method of manufacturing the pouch.
FIG. 10 is a view schematically illustrating a modification of the fourth step and the fifth step of the method of manufacturing the pouch.
FIG. 11 is a view schematically illustrating a second step of a modification of the method of manufacturing the pouch.
FIG. 12 is a view schematically illustrating a third step of the modification of the method of manufacturing the pouch.
FIG. 13 is a view schematically illustrating a step of the method of manufacturing the pouch including one sheet.
FIG. 14 is a table showing lamination forms of laminate films and results of drop experiments and hair observations in Examples 1 to 3 and Comparative Examples 1 to 3.
FIG. 15 is a table showing various characteristics of monolayer films A to F used in Examples and Comparative Examples in FIG. 14.
FIG. 16 is a perspective view illustrating a modification of the pouch in FIG. 1.
FIG. 17 is a cross-sectional view illustrating a seal part of a bag body and a spout in the pouch in FIG. 1.
FIG. 18 is a cross-sectional view illustrating the seal portion of the bag body and the spout as viewed in a direction of arrows along line XVIII-XVIII in FIG. 17.
FIG. 19 is a table showing a relationship among the lamination forms of the laminate films in Example 4 to 6, sealing strength, and machine suitability.

### Description of Embodiments

An embodiment of this invention will be described with reference to the drawings. In the drawings referred to below, the same reference signs are assigned to the same or corresponding members.

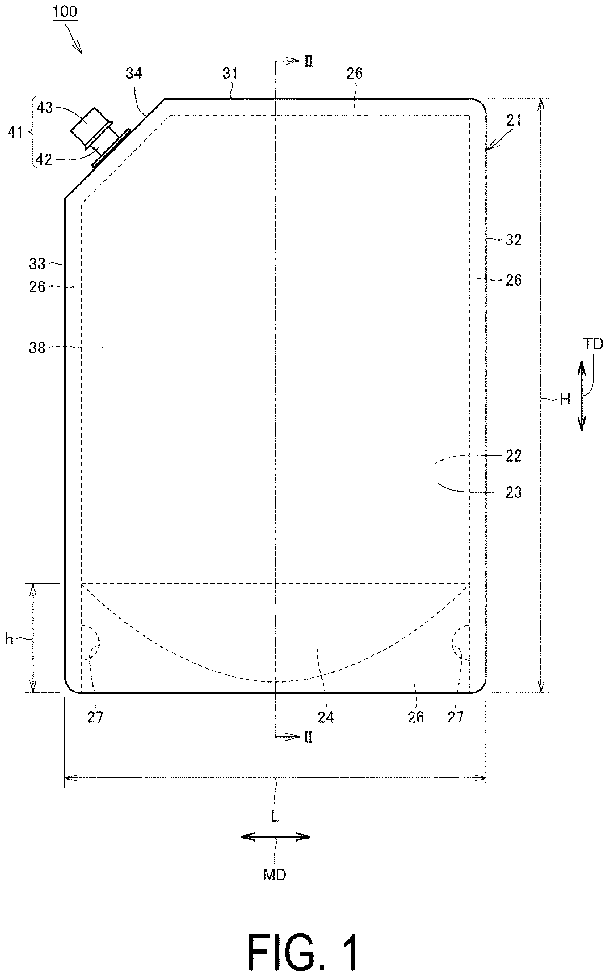

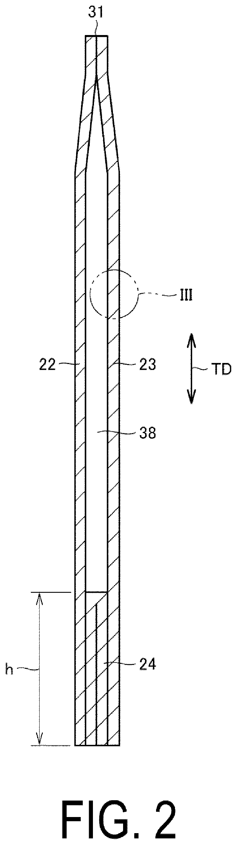

FIG. 1 is a front view illustrating a pouch in an embodiment of this invention. FIG. 2 is a cross-sectional view illustrating the pouch as viewed in a direction of arrows along line II-II in FIG. 1.

With reference to FIGS. 1 and 2, a pouch 100 has a bag body 21. The bag body 21 is made of a plurality of packaging materials each having a sheet shape. The bag body 21 may be made of one packaging material having a sheet shape. The bag body 21 forms an internal space 38 for accommodating contents. The contents are not particularly limited, and may be a liquid or a solid such as powder.

The bag body 21 has a substantially rectangular shape in plan view thereof. In plan view of the bag body 21, a first edge portion 31 extends in a left-right direction of the bag body 21. A second edge portion 32 and a third edge portion 33 extend at intervals in the up-down direction of the bag body 21. A fourth edge portion 34 extends in an oblique direction so as to cross between the first edge portion 31 and the third edge portion 33.

The up-down direction of the bag body 21 corresponds to the up-down direction in a case where the bag body 21 is in an attitude in which the bottom portion of the bag body 21 is disposed at the lowermost portion, and the left-right direction of the bag body 21 corresponds to a direction orthogonal to the up-down direction. Each of the up-down direction and the left-right direction of the bag body 21 is orthogonal to the thickness direction of a first wall portion 22 and a second wall portion 23 described later.

The bag body 21 includes the first wall portion 22, the second wall portion 23, and a gusset portion 24. The first wall portion 22 and the second wall portion 23 are disposed to face each other. The first wall portion 22 and the second wall portion 23 overlap each other in the thickness direction of the first wall portion 22 and the second wall portion 23.

The gusset portion 24 is inserted between the first wall portion 22 and the second wall portion 23 overlapping each other. The gusset portion 24 is provided at the bottom portion of the bag body 21. The gusset portion 24 is composed of a sheet material folded back in the form of mountain fold toward the internal space 38 along a fold extending in the left-right direction. The gusset portion 24 forms a bottom gusset of the bag body 21. When the bag body 21 is made of one packaging material having a sheet shape, the bottom gusset of the bag body 21 may be formed by folding lower end portions of the first wall portion 22 and the second wall portion 23 inward between the first wall portion 22 and the second wall portion 23.

The bag body 21 is provided with a seal portion 26. The seal portion 26 joins the first wall portion 22, the second wall portion 23, and the gusset portion 24 to one another by thermal welding. More specifically, the seal portion 26 joins the gusset portion 24 and the lower end portions of the wall portions of the first wall portion 22 and the second wall portion 23. Both side edge portions of the gusset portion 24 in the left-right direction may be provided with cutouts 27 each having a semicircular shape. In this case, the first wall portion 22 and the second wall portion 23 are joined via the cutouts 27.

The pouch 100 further includes a mouthpiece 41. The mouthpiece 41 forms a bring-out port for bringing out the contents from the bag body 21. The mouthpiece 41 is provided so as to protrude from the fourth edge portion 34 toward the outer side of the bag body 21.

The mouthpiece 41 includes a spout 42 and a cap 43. The spout 42 has a tubular shape. The spout 42 is sealed in a state of being sandwiched between the first wall portion 22 and the second wall portion 23 in the fourth edge portion 34, and causes the inside and the outside of the bag body 21 to communicate with each other. The cap 43 is removably attached to the spout 42. The cap 43 is a screw cap screwed to the spout 42, for example.

The pouch 100 may be a standing pouch that can self-stand with the gusset portion 24 as the lowermost portion. The capacity of the pouch 100 may be 1000 mL or more or 1200 mL or more. The shape of the pouch 100 is not particularly limited, and for example, in addition to the gusset portion 24, a gusset may be provided along the second edge portion 32 and the third edge portion 33.

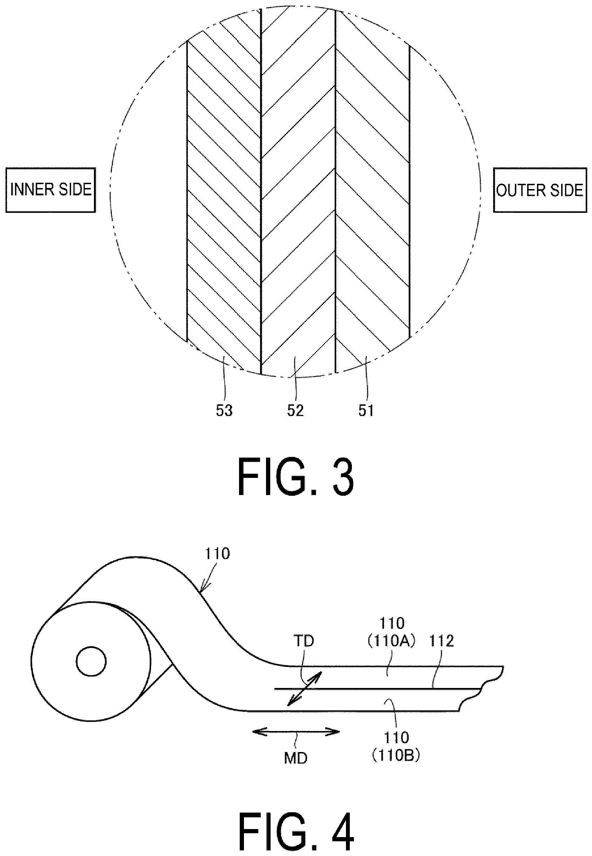

FIG. 3 is a cross-sectional view illustrating the bag body (packaging material) in the range surrounded by the two-dot chain line III in FIG. 2. With reference to FIG. 3, the packaging material constituting the bag body 21 includes a first film 51 and a second film 52.

The first film 51 is composed of machine direction oriented polyethylene (MDOPE) oriented in the machine direction.

The second film 52 is laminated on the first film 51. The first film 51 and the second film 52 are overlapping each other in the thickness direction of the first film 51 and the second film 52. The second film 52 is disposed on the inner side of the bag body 21 from the first film 51. The first film 51 has an appearance of the bag body 21. The second film 52 is joined to the first film 51 with an adhesive. The second film 52 may be joined to the first film 51 by extrusion lamination.

The tensile breaking stress of the second film 52 in the transverse direction is 50 MPa or more. The tensile breaking stress of the second film 52 in the transverse direction may be 60 MPa or more.

The second film 52 is preferably composed of transverse direction oriented polyethylene (TDOPE) oriented in the transverse direction, or biaxial direction oriented polyethylene (BOPE) oriented in the machine direction and in the transverse direction. The second film 52 may include a resin material other than polyethylene oriented in the transverse direction, or a resin material other than polyethylene oriented in the machine direction and in the transverse direction.

The tensile breaking stress of the second film 52 in the machine direction is preferably 100 MPa or less. The elastic modulus of the second film 52 in the transverse direction is preferably 1000 MPa or less, and the elastic modulus of the second film 52 in the machine direction is preferably 1000 MPa or less.

The tensile breaking stress and the elastic modulus of the second film 52 are obtained by a method in compliance with JIS-K-7161, for example.

The thermal shrinkage ratio of the second film 52 in the transverse direction (heating condition at 110 °C for 15 minutes) is preferably 7% or less.

The thermal shrinkage ratio of the second film 52 is obtained by the following method, for example. First, the second film 52 having a size of 50 mm × 50 mm in the machine and transverse directions is prepared as a test piece. A length L₀ before heating of the test piece in the transverse direction is 50 mm. Next, the test piece is placed in a thermostatic bath at 110 °C for 15 minutes. The test piece taken out from the thermostatic bath is left at room temperature for 2 minutes. Next, a length L after heating of the test piece in the transverse direction is measured.

Finally, the thermal shrinkage ratio of the second film 52 is obtained by an expression of thermal shrinkage ratio (%) = 100 × (L - L₀)/L₀. Here, a case where the calculated value is negative corresponds to shrinkage of the film, and a case where the calculated value is positive corresponds to orientation of the film. The fact that the thermal shrinkage ratio of the second film 52 is 7% or less means that the absolute value of the value calculated by the above expression is 7% or less.

The packaging material constituting the bag body 21 further includes a third film 53. The third film 53 is laminated on the second film 52. The second film 52 and third film 53 overlap each other in the thickness direction of the second film 52 and the third film 53. The third film 53 is disposed on a side opposite to the first film 51 with respect to the second film 52. The third film 53 is disposed on the inner side of the bag body 21 from the second film 52. The third film 53 subdivides the internal space 38.

The third film 53 is provided as a sealant layer when a packaging material having a sheet shape is formed into a bag shape by a thermal welding process. The third film 53 is composed of a heat-sealable resin that can be welded by heating. The third film 53 is composed of, for example, a polyolefin-based resin such as low density polyethylene, medium density polyethylene, high density polyethylene, or polypropylene. Particularly preferably, the third film 53 is composed of linear low density polyethylene (LLDPE).

The thickness of the first film 51 may be, for example, 10 µm or more and 50 µm or less, or 10 µm or more and 30 µm or less. The thickness of the second film 52 may be, for example, 10 µm or more and 50 µm or less, or 10 µm or more and 30 µm or less. The thickness of the first film 51 may be the thickness of the second film 52 or less, or may be larger than the thickness of the second film 52. The thickness of the first film 51 may be the same as the thickness of the second film 52.

The thickness of the third film 53 may be, for example, 20 µm or more and 200 µm or less, or 100 µm or more and 200 µm or less.

The first film 51, the second film 52, and the third film 53 may be made of the same type of resin material (polyethylene) having an orientation form (machine direction, transverse direction, biaxial direction, or non-oriented) different from one another.

FIGS. 4 to 10 are views schematically illustrating steps of the method of manufacturing the pouch. With reference to FIGS. 4 to 10, a sheet material 110 having an elongated shape is used for manufacturing of the pouch 100. A long direction of the sheet material 110 (flow direction at the time of resin molding of the sheet material 110) is a machine direction, and a short direction of the sheet material 110 is a transverse direction.

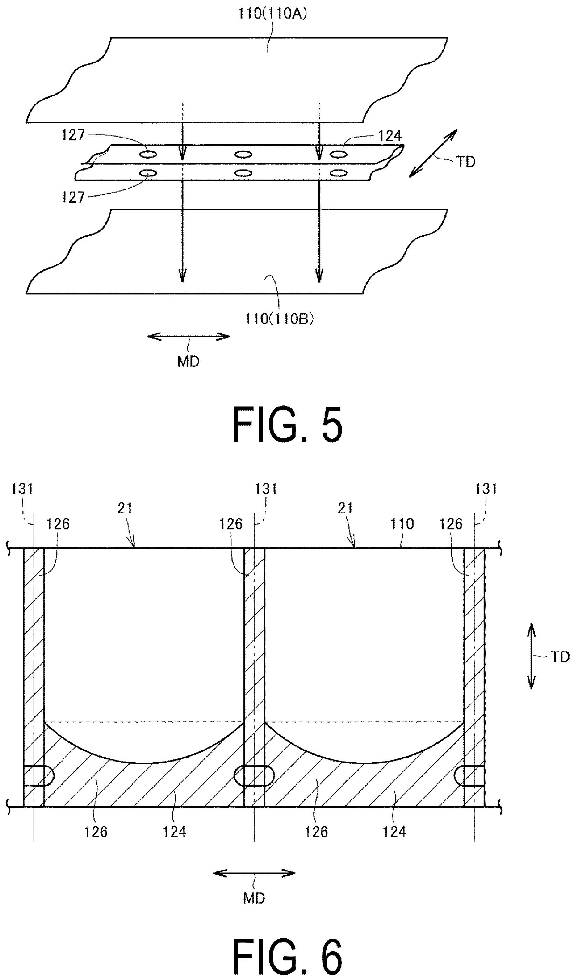

As illustrated in FIG. 4, the sheet material 110 wound in a roll is pulled out and conveyed in the machine direction. The sheet material 110 is provided with a slit 112 extending in the machine direction. The sheet material 110 is divided into two in the transverse direction, thereby obtaining a sheet material 110A and a sheet material 110B. As illustrated in FIG. 5, the sheet material 110A and the sheet material 110B are overlapped in the thickness direction of these sheets.

The sheet material 110A and the sheet material 110B correspond to the first wall portion 22 and the second wall portion 23, respectively, of the bag body 21. The present invention is not limited to such a process, and the sheet material 110 corresponding to the first wall portion 22 and the sheet material 110 corresponding to the second wall portion 23 may be pulled out from different rolls. In this case, the process of providing the sheet material 110 with the slit 112 can be omitted.

A gusset sheet 124 having an elongated shape as a base of the gusset portion 24 is prepared. The gusset sheet 124 is provided with a plurality of holes 127 as bases of the cutouts 27 at intervals in the long direction thereof. The gusset sheet 124 is disposed along the edges of the sheet material 110A and the sheet material 110B extending in the machine direction while being inserted between the sheet material 110A and the sheet material 110B. As illustrated in FIG. 6, the sheet material 110A, the sheet material 110B, and the gusset sheet 124 are thermally welded each other, thereby providing a seal portion 126. The seal portion 126 corresponds to the seal portion 26 of the bag body 21. In the present step, a plurality of the bag bodies 21 arranged in the machine direction are formed.

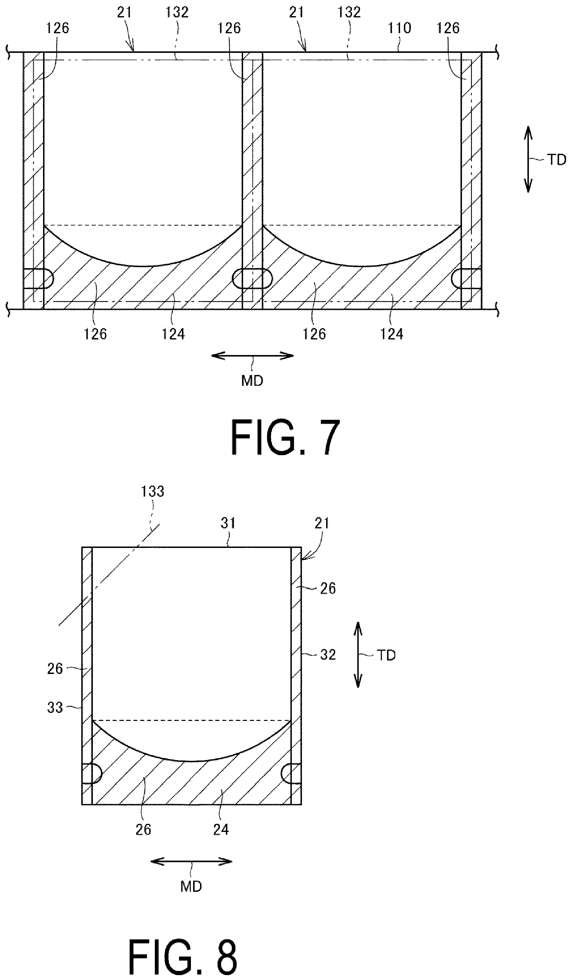

The plurality of bag bodies 21 are cut out by cutting the sheet material 110A and the sheet material 110B along a cutting line 131 extending in the transverse direction. As illustrated in FIG. 7, the plurality of bag bodies 21 may be cut out by cutting the sheet material 110A and the sheet material 110B along a cutting line 132 having a rectangular shape.

As illustrated in FIG. 8, the bag body 21 is cut along a cutting line 133 extending so as to cross between the first edge portion 31 and the third edge portion 33. The present step may be performed simultaneously with the step of cutting the sheet material 110A and the sheet material 110B illustrated in FIG. 6 along the cutting line 131, or the step of cutting the sheet material 110A and the sheet material 110B illustrated in FIG. 7 along the cutting line 132.

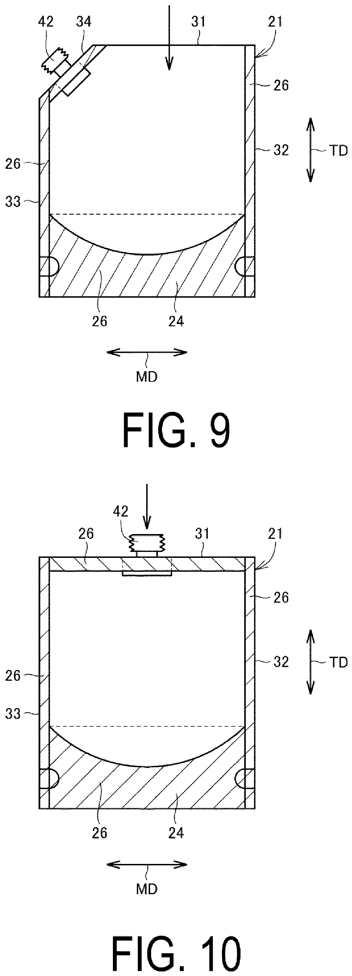

As illustrated in FIG. 9, at a position along the cutting line 133 in the previous process, the spout 42 is inserted between the first wall portion 22 and the second wall portion 23 and thermally welded. The contents are injected into the bag body 21 through an opening portion remaining in the first edge portion 31. The pouch 100 in FIG. 1 is obtained by thermally welding the bag body 21 (the first wall portion 22 and the second wall portion 23) along the first edge portion 31.

As illustrated in FIG. 10, when a pouch in which the spout 42 is attached to a center portion of the first edge portion 31 is manufactured, the spout 42 is inserted between an upper end portion of the first wall portion 22 and an upper end portion of the second wall portion 23 and thermally welded instead of the process illustrated in FIGS. 8 and 9. The contents are injected into the bag body 21 through the spout 42.

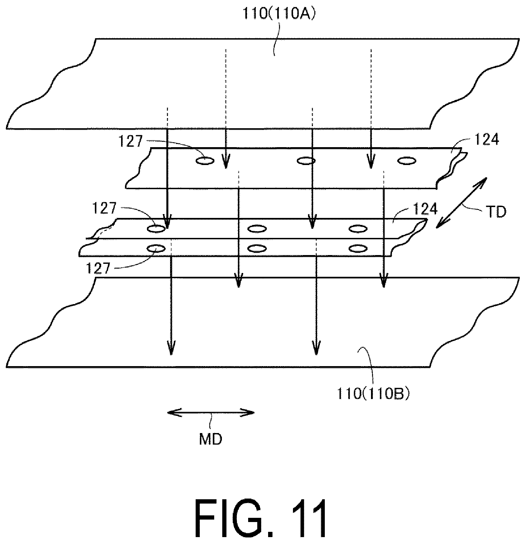

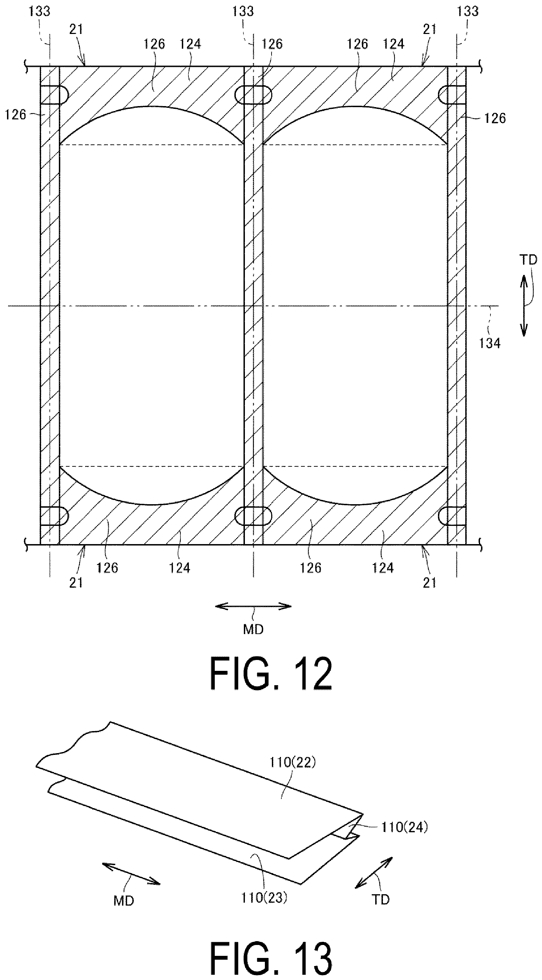

FIGS. 11 and 12 are views schematically illustrating steps of a modification of the method of manufacturing the pouch. The step illustrated in FIG. 11 corresponds to the step illustrated in FIG. 5, and the step illustrated in FIG. 12 corresponds to the step illustrated in FIG. 6.

With reference to FIGS. 11 and 12, in the present modification, the plurality of bag bodies 21 arranged in the machine direction and the transverse direction are cut out from the sheet material 110. As illustrated in FIG. 11, two gusset sheets 124 are disposed along one edge and the other edge of the sheet material 110A and the sheet material 110B extending in the machine direction while being inserted between the sheet material 110A and the sheet material 110B.

As illustrated in FIG. 12, the sheet material 110A, the sheet material 110B, and the gusset sheet 124 are thermally welded each other, thereby providing the seal portion 126. In the present step, the plurality of bag bodies 21 arranged in the machine direction the transverse direction are formed. The sheet material 110A and the sheet material 110B are cut along the cutting line 133 extending in the transverse direction and a cutting line 134 extending in the machine direction, thereby cutting out the plurality of bag bodies 21.

FIG. 13 is a view schematically illustrating a step of the method of manufacturing the pouch including one sheet. The step illustrated in FIG. 13 corresponds to the step illustrated in FIG. 5.

With reference to FIG. 13, when a pouch including one sheet is manufactured, the sheet material 110 pulled out from the roll is folded back along a plurality of folds extending in the machine direction. Specifically, the sheet material 110 is folded back such that the sheet material 110 corresponding to the gusset portion 24 is folded between the sheet material 110 corresponding to the first wall portion 22 and the sheet material 110 corresponding to the second wall portion 23.

In the pouch 100 obtained through the manufacturing process described above, the up-down direction of the pouch 100 corresponds to the transverse direction of the packaging material constituting the pouch 100, and the direction (left-right direction) orthogonal to the up-down direction of the pouch 100 corresponds to the machine direction of the packaging material constituting the pouch 100.

The first film 51 composed of machine direction oriented polyethylene having excellent strength in the machine direction and has machine suitability in which pitch deviation and the like caused by orientation during manufacturing of the pouch 100 are suppressed. On the other hand, the first film 51 composed of machine direction oriented polyethylene has strength in the transverse direction inferior to the strength in the machine direction and thus has a characteristic of being easily torn in the machine direction upon receiving an external force in the transverse direction by itself. On the other hand, in the present embodiment, laminating the second film 52 having tensile breaking stress of 50 MPa or more in the transverse direction on the first film 51 can obtain a packaging material having high strength in the machine direction and in the transverse direction. Manufacturing the pouch 100 (in particular, the pouch 100 in which the packaging material including only polyethylene) by using such a packaging material can achieve the pouch 100 that can obtain excellent machine suitability and is hardly damaged even when dropped.

In the present embodiment, when the second film 52 is composed of transverse direction oriented polyethylene or biaxial direction oriented polyethylene, the second film 52 oriented at least in the transverse direction has a characteristic of high strength in the transverse direction. Therefore, the second film 52 having tensile breaking stress of 50 MPa or more in the transverse direction can be easily obtained.

When the strength of the second film 52 in the machine direction is excessive and the second film 52 is too hard at the time of manufacturing the pouch, a phenomenon in which a linear trace (hair) occurs on a cut surface of the second film 52 frequently occurs. On the other hand, in the present embodiment, when the tensile breaking stress of the second film 52 in the machine direction is 100 MPa or less, occurrence of such a hair can be effectively suppressed.

Also when the second film 52 is difficult to be oriented and is too hard at the time of manufacturing the pouch, a phenomenon in which a linear trace (hair) occurs on a cut surface of the second film 52 frequently occurs. On the other hand, in the present embodiment, when the elastic modulus of the second film 52 in the transverse direction is 1000 MPa or less, and the elastic modulus of the second film 52 in the machine direction is 1000 MPa or less, occurrence of such a hair can be effectively suppressed.

When the thermal shrinkage ratio (heating condition at 110 °C for 15 minutes) of the second film 52 in the transverse direction is 7% or less, thermal deformation of the packaging material in the transverse direction can be suppressed at the time of manufacturing a pouch from the packaging material. This can prevent occurrence of distortion of the film, printing deviation, deviation of the seal position, or the like, and can obtain the pouch 100 of high quality.

In the present embodiment, when the packaging material is made of only the same type of resin material (polyethylene), recyclability is facilitated, and the packaging material conforms to the sustainable circulation economy required by Sustainable Development Goals (SDGs), and can greatly contribute to reduction of plastic waste. In this case, the spout 42 also preferably includes a polyethylene-based resin.

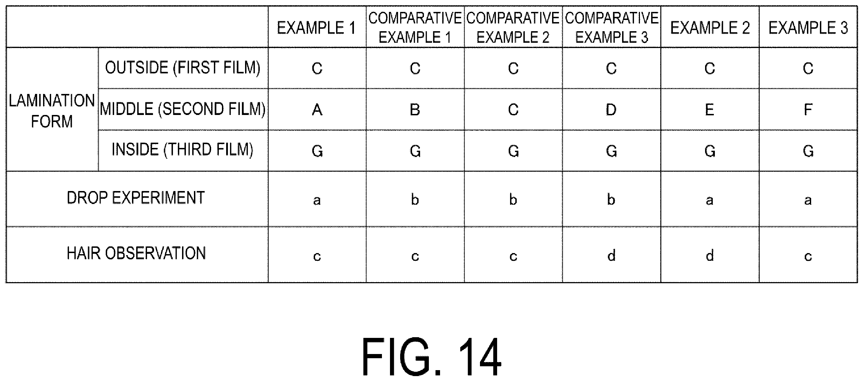

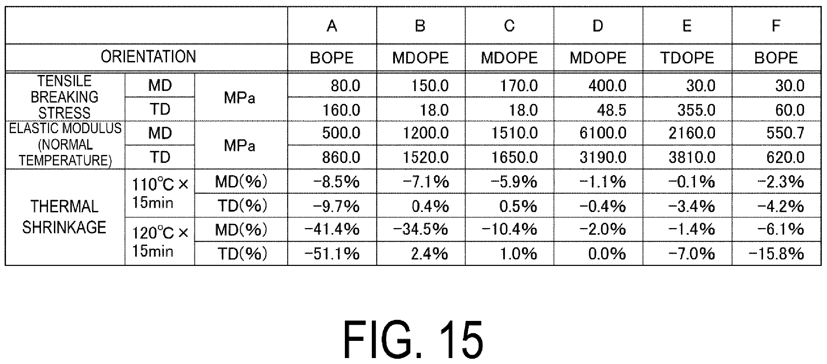

FIG. 14 is a table showing lamination forms of laminate films and results of drop experiments and hair observations in Examples 1 to 3 and Comparative Examples 1 to 3. FIG. 15 is a table showing various characteristics of monolayer films A to F used in Examples and Comparative Examples in FIG. 14.

With reference to FIGS. 14 and 15, the pouch 100 in FIG. 1 was manufactured using a laminate film in which the films A to F that are monolayer in FIG. 15 and a film G (linear low density polyethylene having a thickness of 140 µm) were appropriately combined.

The film A is biaxial direction oriented polyethylene (BOPE), and has a thickness (actually measured) of 25.0 µm. The film B is machine direction oriented polyethylene (MDOPE), and has a thickness (actually measured) of 25.0 µm. The film C is machine direction oriented polyethylene (MDOPE), and has a thickness (actually measured) of 25.0 µm. The film D is machine direction oriented polyethylene (MDOPE), and has a thickness (actually measured) of 25.0 µm. The film E is transverse direction oriented polyethylene (TDOPE), and has a thickness (actual measurement) of 18.0 µm. The film F is biaxial direction oriented polyethylene (BOPE), and has a thickness (actually measured) of 25.0 µm.

In the lamination forms of the laminate films used in Examples 1 to 3 and Comparative Examples 1 to 3, as shown in FIG. 14, the film shown in an item "outside" corresponds to the first film 51, the film shown in an item "middle" corresponds to the second film 52, and the film shown in an item "inside" corresponds to the third film 53.

As illustrated in FIGS. 1 and 2, a length H of the pouch 100 in the up-down direction was 280 mm, the length L of the pouch 100 in the left-right direction was 200 mm, and a length h of the gusset portion 24 in the up-down direction was 60 mm. The capacity of the pouch 100 was 1300 mL.

Next, a drop test of the pouch 100 manufactured using the laminate film described above was conducted. In the drop test, first, cold water having a temperature of 5 °C was put into the pouch 100. Next, the pouch 100 was dropped 5 times from a height of 1.0 m in an attitude with the bottom portion (gusset portion 24) being the lowermost portion. Next, the bottom portion (gusset portion 24) of the pouch 100 was observed to confirm whether a crack occurs.

The results of the drop tests in Examples 1 to 3 and Comparative Examples 1 to 3 are as shown in FIG. 14, where "a" corresponds to a case where no crack occurred, and "b" corresponds to a case where a crack occurred.

In Example 1 and Example 3, no cracks occurred at the bottom portion of the pouch 100 by using the first film 51 composed of machine direction oriented polyethylene and the second film 52 composed of biaxial direction oriented polyethylene and having tensile breaking stress of 50 MPa or more in the transverse direction. In Example 2, no cracks occurred at the bottom portion of the pouch 100 by using the first film 51 composed of machine direction oriented polyethylene and the second film 52 composed of transverse direction oriented polyethylene and having tensile breaking stress of 50 MPa or more in the transverse direction.

In the manufacturing process of the pouch 100, the cut surface of the second film 52 was observed to confirm whether a hair occurs.

The results of observations of the cut surface of the second film 52 in Examples 1 to 3 and Comparative Examples 1 to 3 are as shown in FIG. 14, where "c" corresponds to a case where no hair was observed, and "d" corresponds to a case where a slight hair was observed.

In Examples 1 to 3, using the second film 52 having tensile breaking stress of 100 MPa or less in the machine direction caused no hair to occur or caused slight hairs to occur even when occurred. In particular, in Example 1 and Example 3, since the elastic modulus of the second film 52 in each of the transverse direction and the machine direction was 1000 MPa or less, no hair occurred.

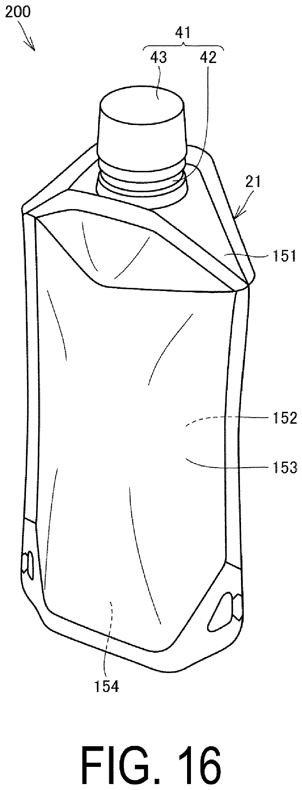

FIG. 16 is a perspective view illustrating the modification of the pouch in FIG. 1. With reference to FIG. 16, in a pouch 200 in the present modification, the bag body 21 includes a first wall portion 152, a second wall portion 153, a top surface gusset portion 151, and a bottom surface gusset portion 154.

The first wall portion 152 and the second wall portion 153 are disposed to face each other. The first wall portion 152 and the second wall portion 153 overlap each other in the thickness direction of the first wall portion 152 and the second wall portion 153.

The bottom surface gusset portion 154 is provided at the bottom portion of the bag body 21. The bottom surface gusset portion 154 is connected to lower end portions of the first wall portion 152 and the second wall portion 153. The top surface gusset portion 151 is provided at a top portion of the bag body 21. The top surface gusset portion 151 is provided to face the bottom surface gusset portion 154 in the up-down direction. The top surface gusset portion 151 is connected to upper end portions of the first wall portion 152 and the second wall portion 153. The top surface gusset portion 151 is provided with the spout 42.

As illustrated in the present modification, the present invention is not limited to the standing pouch specifications with the bottom gusset, and can be applied to pouches having various shapes.

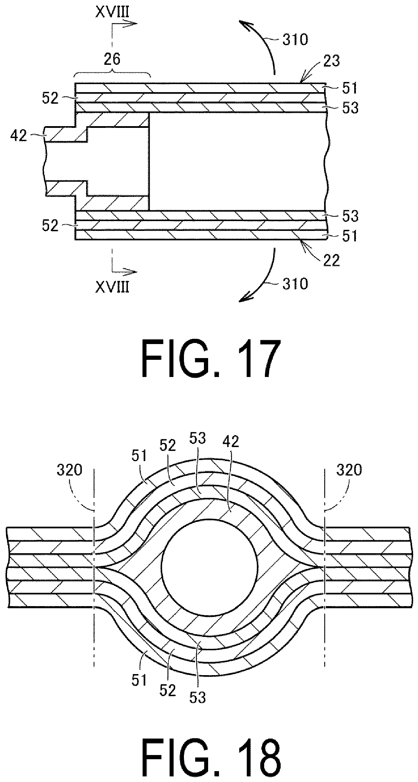

FIG. 17 is a cross-sectional view illustrating the seal part of the bag body and the spout in the pouch in FIG. 1. FIG. 18 is a cross-sectional view illustrating the seal portion of the bag body and the spout as viewed in a direction of arrows along line XVIII-XVIII in FIG. 17.

With reference to FIGS. 17 and 18, the third film 53 corresponds to the innermost layer disposed on the innermost side of the first film 51, the second film 52, and the third film 53 constituting the bag body 21. The first film 51 corresponds to the outermost layer disposed on the outermost side of the first film 51, the second film 52, and the third film 53 constituting the bag body 21.

The spout 42 is inserted between the first wall portion 22 and the second wall portion 23 of the bag body 21. The spout 42 forms a sealant layer in the bag body 21, and is welded to the third film 53 corresponding to the innermost layer.

Assuming a pouch with a spout formed by laminating different materials (outermost layer: nylon or PET, intermediate layer: aluminum vapor-deposited PET (VMPET), innermost layer: linear low density polyethylene (LLDPE)), this pouch is large in temperature difference between the melting point of the spout composed of high density polyethylene (HDPE) and the melting point of the outermost layer. (Melting point of HDPE: 126 °C or higher and 137 °C or lower, melting point of nylon: 215 °C or higher and 225 °C or lower, melting point of PET: 264 °C, melting point of LLDPE: 105 °C or higher and 126 °C or lower)

On the other hand, the pouch 100 in the present embodiment formed by laminating the polyethylene-based resin is small in temperature difference between the melting point of the spout 42 composed of high density polyethylene (HDPE) and the melting point of the outermost layer (melting point of MDOPE: 130 °C as a typical example). For this reason, in the process of welding the spout 42 to the bag body 21, when a meltable heat amount is applied to the spout 42 and the innermost layer, there can occur a problem that the outermost layer is deformed or the outermost layer is stuck to a seal bar used in the welding process.

From such a viewpoint, a melting point (Ta) of the outermost layer of the bag body 21 is preferably higher than a melting point (Tb) of the innermost layer of the bag body 21 (Ta > Tb).

In this case, by welding the spout 42 to the bag body 21 by applying a heat amount corresponding to the temperature of each of the melting point (Tb) of the innermost layer of the bag body 21 and a melting point (Tc) of the spout 42 or more and less than the melting point (Ta) of the outermost layer of the bag body 21, it is possible to prevent shrinkage of the outermost layer of the bag body 21 and to prevent the outermost layer of the bag body 21 from being stuck to the seal bar while melting both the innermost layer of the bag body 21 and the spout 42 to sufficiently secure the sealing strength between the both.

The melting point (Tc) of the spout 42 is preferably the same as the melting point (Tb) of the innermost layer of the bag body 21 (Tc = Tb). The spout 42 and the innermost layer of the bag body 21 are preferably made of a polyethylene-based resin of the same material.

In these cases, the heat amount for melting both the innermost layer of the bag body 21 and the spout 42 is not determined based on the higher temperature of the melting point (Tc) of the spout 42 and the melting point (Tb) of the innermost layer of the bag body 21, and therefore the temperature difference between the temperature at the time of the welding process and the melting point (Ta) of the outermost layer of the bag body 21 can be made larger. This can more effectively prevent deformation of the outermost layer of the bag body 21.

The melting point (Tc) of the spout 42 may be in a range higher than the melting point (Tb) of the innermost layer of the bag body 21 and lower than the melting point (Ta) of the outermost layer of the bag body 21 (Tb < Tc < Ta).

The outermost layer of the bag body 21 is preferably machine direction oriented polyethylene (MDOPE) and high density polyethylene (HDPE). The melting point (Ta) of the outermost layer of the bag body 21 is preferably 125 °C or higher and 140 °C or lower, and more preferably 125 °C or higher and 135 °C or lower.

The innermost layer of the bag body 21 is preferably linear low density polyethylene (LLDPE). The melting point (Tb) of the innermost layer of the bag body 21 is preferably 100 °C or higher and 120 °C or lower, and more preferably 105 °C or higher and 115 °C or lower.

The spout 42 is a polyethylene-based resin. The spout 42 is preferably linear low density polyethylene (LLDPE). The spout 42 may be low density polyethylene (LDPE). Here, the melting point (107 °C) of LDPE and the melting point (124 °C) of LLDPE are lower than the melting point (130 °C) of HDPE. LLDPE has a harder property than LDEP. Therefore, in a case where LLDPE is used as the material of the spout 42, an effect of suppressing deformation of the spout 42 is exhibited in the process of welding the spout 42 to the bag body 21.

The melting point (Tc) of the spout 42 is preferably 100 °C or higher and 130 °C or lower, and more preferably 105 °C or higher and 125 °C or lower.

Recycled polyethylene may be used as the polyethylene-based resin constituting each layer of the bag body 21. The weight of the polyethylene-based resin is preferably 90% or more of the weight of the entire packaging material, and more preferably 95% or more of the weight of the entire packaging material.

The innermost layer of the bag body 21 forming the sealant layer may include a gas barrier resin layer. The gas barrier resin layer constituting a heat seal layer may include at least one type of gas barrier resin.

Examples of the gas barrier resin include ethylene-vinyl alcohol copolymer (EVOH), polyvinyl alcohol, polyacrylonitrile, polyamides such as nylon 6, nylon 6,6, and polymethaxylylene adipamide (MXD6), polyesters, polyurethanes, and (meth)acrylic resins, and among these, EVOH is preferable from the viewpoint of oxygen barrier property and water vapor barrier property. Examples of the gas barrier sealant layer having a gas barrier resin layer include polyethylene (LLDPE)/adhesive resin layer (PE)/EVOH/adhesive resin layer (PE)/polyethylene (LLDPE).

LLDPE (sealant layer) may be further laminated on the inner side of the gas barrier layer of polyethylene (LLDPE)/adhesive resin layer (PE)/EVOH/adhesive resin layer (PE)/polyethylene (LLDPE). Examples of the lamination structure of the bag body 21 include MDOPE (corresponding to the first film 51)/BOPE (corresponding to the second film 52)/"(LLDPE)/adhesive resin layer (PE)/EVOH/adhesive resin layer (PE)/polyethylene (LLDPE)"/LLDPE (corresponding to the third film 53 including the gas barrier resin layer (in the quotation marks)).

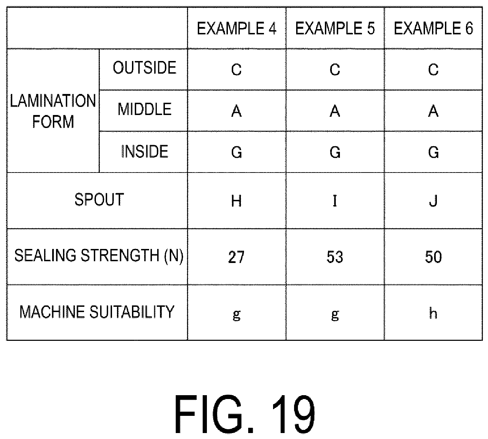

FIG. 19 is a table showing the relationship among the lamination forms of the laminate films in Example 4 to 6, the sealing strength, and the machine suitability.

The pouch 100 in FIG. 1 was manufactured using the laminate films in the lamination forms shown in FIG. 19. The pouch 100 in Example 4 to 6 corresponds to the pouch 100 in Example 1 in FIG. 14.

In Example 4 to 6, the film C constituting the outermost layer (first film 51) of the bag body 21 is composed of MDOPE (melting point: 130 °C), and the film G constituting the innermost layer (third film 53) of the bag body 21 is composed of LLDPE (melting point: 110 °C). Corresponding to the spout 42 in FIG. 1, a spout H composed of HDPE (melting point: 130 °C) was used in Example 4, a spout I composed of LLDPE (melting point: 124 °C) was used in Example 5, and a spout J composed of LDPE (melting point: 107 °C) was used in Example 6.

Next, in the pouch 100 of Example 4 to 6 described above, the sealing strength between the innermost layer of the bag body 21 and the spout 42 was measured. Autograph AG-Xplus (available from Shimadzu Corporation) was used for measurement of the sealing strength. The measurement was performed under the conditions of the same temperature and the same pressure in Example 4 to 6.

Specifically, the spout 42 and the bag body 21 joined to the outer peripheral surface of the spout 42 were cut out from the pouch 100 by cutting the bag body 21 with two two-dot chain lines 320 (width 20 mm) illustrated in FIG. 18. As illustrated in FIG. 17, the first wall portion 22 and the second wall portion 23 were gripped and lifted in the direction indicated by an arrow 310, whereby a tensile force in the up-down direction in FIG. 17 was applied to the joint portion between the spout 42 and the bag body 21. Then, the tensile force when the bag body 21 was peeled off from the spout 42 was measured, and this was taken as the sealing strength.

In Example 4 in which the melting point of the outermost layer of the bag body 21 is the same as the melting point of the spout 42, the process of welding the spout 42 to the bag body 21 was performed with the heat amount at which deformation does not occur in the outermost layer of the bag body 21, and therefore the heat amount was insufficient and the sealing strength was the smallest value. On the other hand, in Examples 5 and 6 using the spout 42 having a low melting point, it was possible to melt the spout 42 with a heat amount at which deformation does not occur in the outermost layer of the bag body 21, and a high sealing strength was thus able to be obtained.

Next, the machine suitability of the pouch 100 of Example 4 to 6 was evaluated. The results of evaluation of machine suitability are as shown in FIG. 19, where "g" corresponds to a case where excellent mechanical characteristics were obtained, and "h" corresponds to a case where mechanical characteristics inferior to "g" were obtained.

Specifically, in Examples 4 and 5 using high hardness HDPE and LLDPE, respectively, as the material of the spout 42, deformation of the spout 42 was not observed at the time of the welding process of the spout 42 to the bag body 21. On the other hand, in Example 6 using low hardness LDPE as the material of the spout 42, slight deformation of the spout 42 was observed.

It should be understood that the embodiment disclosed herein is illustrative in all respects and not restrictive. The scope of the present invention is defined by the scope of the claims rather than the description above, and is intended to include all modifications within the scope and meaning equivalent to the terms of the claims. Reference Signs List

21 bag body, 22, 152 first wall portion, 23, 153 second wall portion, 24 gusset portion, 26, 126 seal portion, 31 first edge portion, 32 second edge portion, 33 third edge portion, 34 fourth edge portion, 38 internal space, 41 mouthpiece, 42 spout, 43 cap, 51 first film, 52 second film, 53 third film, 100, 200 pouch, 110, 110A, 110B sheet material, 112 slit, 131, 132, 133, 134 cutting line, 124 gusset sheet, 127 hole, 151 top surface gusset portion, 154 bottom surface gusset portion.

## Claims

1. A pouch comprising a packaging material, wherein
the packaging material includes
a first film composed of machine direction oriented polyethylene oriented in a machine direction corresponding to a direction orthogonal to an up-down direction of the pouch and
a second film laminated on the first film, and
the second film has tensile breaking stress in a transverse direction corresponding to the up-down direction of the pouch of 50 MPa or more.

2. The pouch according to claim 1, wherein the second film is composed of transverse direction oriented polyethylene oriented in the transverse direction corresponding to the up-down direction of the pouch or biaxial direction oriented polyethylene oriented in the machine direction and in the transverse direction.

3. The pouch according to claim 1 or 2, wherein the second film has tensile breaking stress in the machine direction of 100 MPa or less.

4. The pouch according to claim 1 or 2, wherein the second film has an elastic modulus in each of the transverse direction and the machine direction of 1000 MPa or less.
